# EUROPEAN PATENT SPECIFICATION

(11) **EP 2 242 935 B1**
(45) Date of publication and mention of the grant of the patent: **22.06.2011**
(21) Application number: 10701897.0
(22) Date of filing: 14.01.2010
(51) Int. Cl.: F16C 32/06, F16C 37/00

(54) **GAS BEARING SPINDLES AND GAS BEARING ASSEMBLIES FOR GAS BEARING SPINDLES**
GASLAGERSPINDELN UND GASLAGERBAUGRUPPEN FÜR GASLAGERSPINDELN
BROCHES À PALIER À GAZ ET ENSEMBLES PALIERS À GAZ POUR BROCHES À PALIER À GAZ

(30) Priority: 19.01.2009 GB 0900855; 09.12.2009 GB 0921585
(43) Date of publication of application: 27.10.2010
(73) Proprietor: GSI Group Limited, Swift Valley Rugby Warwickshire CV21 1QN (GB)
(72) Inventor: HOCKLEY, Steve, Hampshire SO52 9GB (GB); STRATTON, John, David, Hampshire SO40 7BS (GB)
(74) Representative: Faulkner, Thomas John
(86) International application number: PCT/GB2010/000054
(87) International publication number: WO 2010/082027

(56) References cited:
- DE-A1-102007 058 066
- US-A- 4 474 483
- US-A- 4 884 899

## Description

This invention relates to gas bearing spindles and gas bearing assemblies for gas bearing spindles.

Of particular interest are gas bearing spindles which are suitable for use in high speed drilling applications for example in PCB (Printed Circuit Board) drilling. In PCB drilling machines there is a desire to have a machine which is capable of drilling holes over a large range of different diameters and correspondingly over a large range of different speeds. Thus for example, it would be desirable to provide a machine which would be able to, for example, at one end of the scale drill 6.3mm diameter holes at speeds of say 15,000-20,000 rpm and at the other end of the scale still be able to drill say 0.1mm to 0.2mm diameter holes at say 200,000 rpm or 300,000 rpm. Further, such holes need to be drilled with a high degree of accuracy and in general terms, the provision of good quality holes in the printed circuit board is required.

When drilling at most, if not at all, speeds then radial and/or axial vibration in the device can tend to lower the quality of the holes which are drilled. The provision of damping to damp such vibrations can significantly help to reduce this problem.

In addition, this damping may allow the shaft to achieve a significantly greater top speed, by suppressing the onset of half speed whirl within the bearing gas film. (Half speed whirl is a well understood resonance condition that occurs in supercritical aerostatic bearings systems, the onset of which usually results in spindle failure due to the unstable nature of the gas film. This occurs at approximately twice the bearing gas film critical speed).

One existing method for providing damping is to mount the bearings of the spindle on elastomeric 0 rings. In such a case, in principle, the bearings are allowed to move radially and axially on the O rings with shaft motion within set constraints. Thus, vibration energy created during a drilling process can be absorbed by the continuous deformation of the O ring material giving good damping of the shaft. However, a draw back in applying this technology to PCB spindles is that at the high speeds needed to drill the very small holes, considerable heat is generated inside the bearings due to gas film shear. One approach to overcome this problem is to provide cooling, for example, water cooling to prevent overheating and to control thermal expansion of the air film gap.

This however, is not without difficulties - cooling needs to be provided to the right place and damping effects need to be retained.

DE 10 2007 058066 describes an air bearing spindle in which the radial bearing is mounted in O rings. The radial bearing has a two part construction comprising an inner shell bearing portion and an intermediate sleeve portion outside that. Those two components being supported in the O rings.

The present invention is directed at providing apparatus where such cooling can be provided without removing desirable damping within the spindle.

According to one aspect of the present invention there is provided a gas bearing assembly for a gas bearing spindle, the assembly comprising a housing portion and an inner radial bearing portion disposed within and resiliently mounted relative to the housing portion, the inner radial bearing portion comprising an inner shell bearing portion having a bearing face, and an intermediate sleeve portion which is disposed between the inner shell bearing portion and the housing portion, wherein a liquid coolant channel is provided between the inner bearing shell portion and the intermediate sleeve portion.

Such an arrangement can allow the use of a liquid coolant to cool the bearing assembly - particularly in the region of the bearing face, without damaging the effectiveness of a resilient mounting between the housing portion and the inner radial bearing portion.

The liquid coolant channel may be partly defined by a surface of the intermediate sleeve portion. The liquid coolant channel may be partly defined by a surface of the inner shell bearing portion.

At least one resilient damping member may be provided between the inner radial bearing portion and the housing portion. Such a member can provide or at least facilitate the resilient mounting between the inner radial bearing portion and the housing portion.

The at least one resilient damping member may be disposed so as to surround the inner radial bearing portion. The at least one resilient damping member may be disposed on the intermediate sleeve portion.

Preferably there is a pair of resilient damping members disposed between the housing portion and the inner radial bearing portion, and surrounding the inner radial bearing portion. The resilient damping members in the pair may be axially spaced from one another. The resilient damping members in the pair may be disposed towards respective opposite ends of the inner radial bearing portion. The pair of resilient damping members may be disposed on the intermediate sleeve portion.

At least one O ring may be disposed between the housing portion and the inner radial bearing portion. The at least one O ring may provide, or at least contribute towards, the resilient mounting between the housing portion and the inner radial bearing portion.

The at least one O ring may be disposed so as to surround the inner radial bearing portion. The at least one O ring may be disposed with its axis generally parallel to, preferably generally co-incident with, the axis of the inner radial bearing portion. The at least one O ring may be disposed on the intermediate sleeve portion.

Preferably there is a pair of O rings disposed between the housing portion and the inner radial bearing portion, and surrounding the inner radial bearing portion. The

O rings in the pair may be axially spaced from one another. The O rings in the pair may be disposed towards respective opposite ends of the inner radial bearing portion. The pair of O rings may be disposed on the intermediate sleeve portion.

The inner shell bearing portion may be generally annular. The intermediate portion may be generally annular.

The inner shell portion may fit closely inside the intermediate portion - this may be an interference fit.

The housing portion may have a bore in which the inner radial bearing portion is disposed, with the inner radial bearing portion having an outer curved surface facing the wall of the bore and a clearance being provided between the outer curved surface of the inner radial bearing portion and the bore. The outer curved surface of the inner radial bearing portion may be an outer curved surface of the intermediate portion. The clearance may be maintained by the at least one resilient damping member.

The bore may be a cylindrical bore. The outer curved surface of the inner radial bearing portion may be a cylindrical surface.

The liquid coolant channel which is provided between the inner bearing shell portion and the intermediate sleeve portion may have an outlet which is at the outer curved surface of the inner radial bearing portion.

The liquid coolant channel which is provided between the inner bearing shell portion and the intermediate sleeve portion may have an inlet which is at the outer curved surface of the inner radial bearing portion.

The gas bearing assembly may comprise at least one auxiliary O ring which is disposed around an inlet to or an outlet from the liquid coolant channel which is provided between the inner bearing shell portion and the intermediate sleeve portion. There may be a pair auxiliary O rings - one disposed around an inlet to the liquid coolant channel and one disposed around an outlet from the liquid coolant channel. The or each auxiliary O ring may be disposed on the intermediate sleeve portion. The or each auxiliary O ring may be disposed with its main axis transverse to the axis of the gas bearing assembly. The main axis of the or each auxiliary O ring may be oriented along a radius of the gas bearing assembly.

In general terms sealing means may be provided for effecting a seal between the housing portion and the inner radial bearing portion. The O rings and/or auxiliary O rings may be provided for effecting a seal between the housing portion and the inner radial bearing portion.

Sealing means may be provided between the inner shell bearing portion and the intermediate sleeve portion. Sealing O rings may be provided between the inner shell bearing portion and the intermediate sleeve portion.

The bearing face will typically comprise at least one series of gas outlets for supplying gas to create a gas film between the bearing face and a shaft disposed in the bearing assembly.

Each gas outlet may comprise a jet.

A respective pair of axially spaced seals, for example sealing O rings, may be provided in the inner radial bearing portion for the or each series of gas outlets, with one seal in the pair disposed on one side of the series of gas outlets and another seal in the pair disposed on the other side of the series of gas outlets.

The bearing assembly may comprise two series of gas outlets which series are axially spaced from one another with the liquid coolant channel axially between the two series of gas outlets.

Seals, for example the above mentioned O rings, can together provide sealing to provide gas paths through the bearing assembly to the or each series of gas outlets and a liquid path through the bearing assembly to the liquid coolant channel.

The liquid coolant channel may be an annular channel, which may have an axis which is coincident with the main axis of the bearing assembly.

The gas bearing assembly may comprise an axial bearing portion. The gas bearing assembly may comprise a second liquid coolant channel, which channel is provided in the region of the axial bearing portion and which is in fluid communication with the liquid coolant channel provided between the inner bearing shell portion and the intermediate sleeve portion. The second liquid coolant channel may be an annular channel.

The gas bearing assembly may comprise a resilient electrical contact element for electrically connecting the housing portion to the inner radial bearing portion.

The contact element should be arranged so as to not significantly affect the resilient mounting of the inner radial bearing portion, whilst providing an electrical path through the bearing assembly for use in electrical tool touch down techniques which are often used in drilling and other machining processes.

An initial candidate for such a contact element would be a carbon filament brush. However, it has been found that such a brush is undesirable as due to wear and/or maintenance filaments tend to be lost which can then get caught in an O ring seal and can cause water leaks. Thus preferably the resilient electrical contact element comprises a compression spring.

The gas bearing assembly may be an aerostatic gas bearing assembly.

According to another aspect of the present invention there is provided a gas bearing spindle comprising a gas bearing assembly as defined above and a shaft journalled within the bearing assembly.

Embodiments of the present invention will now be described, by way of example only, with reference to the accompanying drawings in which:
Figure 1 schematically shows part of a first drilling spindle which is useful in understanding the invention;
Figure 2 schematically shows a second drilling spindle which, in this case, embodies the present invention;
Figure 3 schematically shows a bearing assembly of the spindle shown in Figure 2;
Figure 4A and 4B schematically show an intermediate sleeve of the bearing assembly shown in Figure 3 and an O ring groove provided in that sleeve; and
Figures 5A and 5B schematically show modified versions of the bearing assembly shown in Figure 3 which include resilient electrical contact elements.

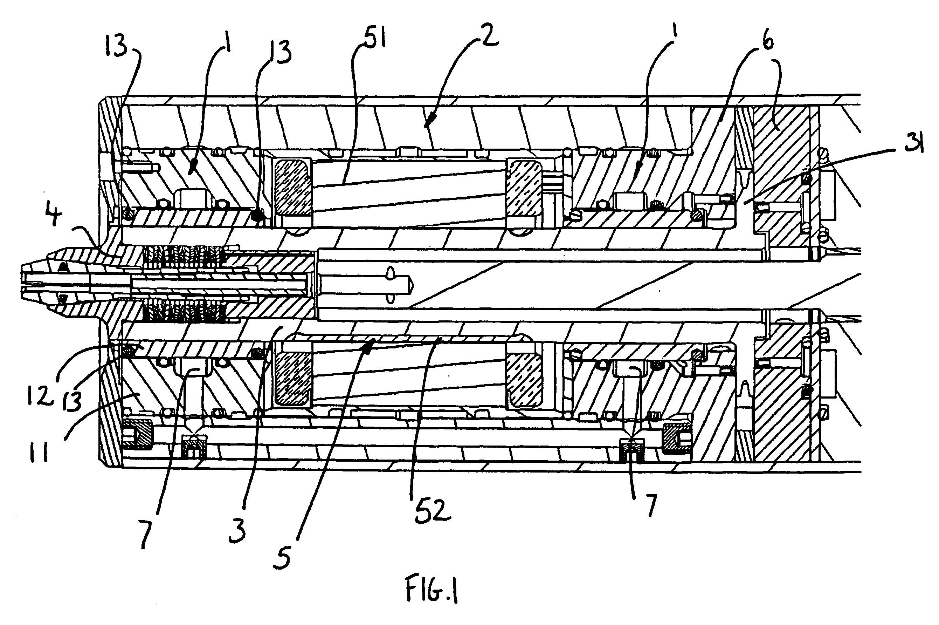

Figure 1 schematically shows part of a high speed PCB drilling spindle which in many respects is conventional. The PCB drilling spindle is an air bearing spindle and comprises two radial air bearing assemblies 1 housed within a body portion 2 of the spindle. A shaft 3 carrying a tool holder 4 is journalled within the radial air bearings 1. A motor 5 made up of a stator 51 disposed in the body portion 2 and windings 52 laid in to the shaft 3 is provided for rotatingly driving the shaft 3 relative to the body portion 2. The tool holder 4 is arranged for holding a tool, in this instance a drilling tool for drilling holes in PCB material. An axial air bearing arrangement 6 is provided which acts on a thrust runner 31 which is provided at the end of the shaft 3 remote from the tool holder 4.

To the degree which the drilling spindle of Figure 1 has been described above, it is conventional. Thus detailed description of its general structure and operation is omitted from this specification for the sake of brevity. It will be appreciated that there is a well established art in providing air bearing spindles including suitable air bearings and a motor drive together with a tool holder for holding the tool which is to be driven.

The present application is concerned mainly with the structure and functioning of some aspects of the bearings 1, 6 which may be provided in such a spindle.

In each of the radial air bearing assemblies 1 of the spindle shown in Figure 1 there are two main components. The first is an outer bearing housing portion 11 within which is mounted an inner shell bearing portion 12. Both the outer bearing housing portion 11 and inner shell bearing portion 12 are generally annular components. Thus the inner shell bearing 12 is mounted within the bore of the outer bearing housing portion 11. However, a significant clearance is provided between the outer curved surface of the inner shell bearing portion 12 and the inner curved surface of the bore of the outer bearing portion 11.

The inner shell bearing portion 12 is mounted to the outer bearing housing portion 11 via a pair of O rings 13. One of the O rings is provided towards one end of the bearing assembly 1 and the other O ring 13 is provided towards the other end of the bearing assembly 1. These O rings 13 serve to support the inner shell bearing portion 12 within the outer bearing housing portion 11 in a resilient manner.

Because of the clearance between these two portions 11, 12 mentioned above, and the resilient nature of the O rings 13, the inner shell bearing portion 12 has some freedom of movement in both the axial and radial direction relative to the outer bearing housing portion 11.

Of course as any such movement takes place, the O rings 13 will be deformed. This arrangement is true of both of the bearing assemblies 1 provided in the spindle of Figure 1.

Thus, as the shaft 3 tends to vibrate during operation of the spindle, the inner shell bearing portion 12 can move on the O rings 13, and the O rings 13 can absorb this vibrational energy and thus damp the vibrations in the shaft 3. This in turn can lead to better drilling performance. As alluded to in the introduction to this specification there are existing systems making use of such damping.

In the present spindle however, annular water cooling channels 7 are provided within the bearing assemblies 1 to allow coolant, specifically in this case, water, to be supplied to the coolant channels 7 via appropriate channelling to provide cooling of the bearing assembly 1 and in particular cooling of the inner shell bearing portion 12.

Initially it would be considered that such an arrangement would give rise to improved performance in the bearing assemblies 1 and hence the spindle as a whole.

However, it has been found that the provision of coolant in such channels has an extremely detrimental effect on the damping performance of the bearing assemblies 1. This is because once the annular coolant channels 7 are filled with water they act as a solid transmitter of energy from the inner shell bearing portion 12 to the outer bearing housing 11 dramatically reducing the effect of the O ring 13 damping. Furthermore, the higher the water pressure inside the bearing, the lower the net damping achieved.

Thus, whilst at first sight the arrangement of the spindle shown in Figure 1 would be considered to be attractive, the reality is rather different.

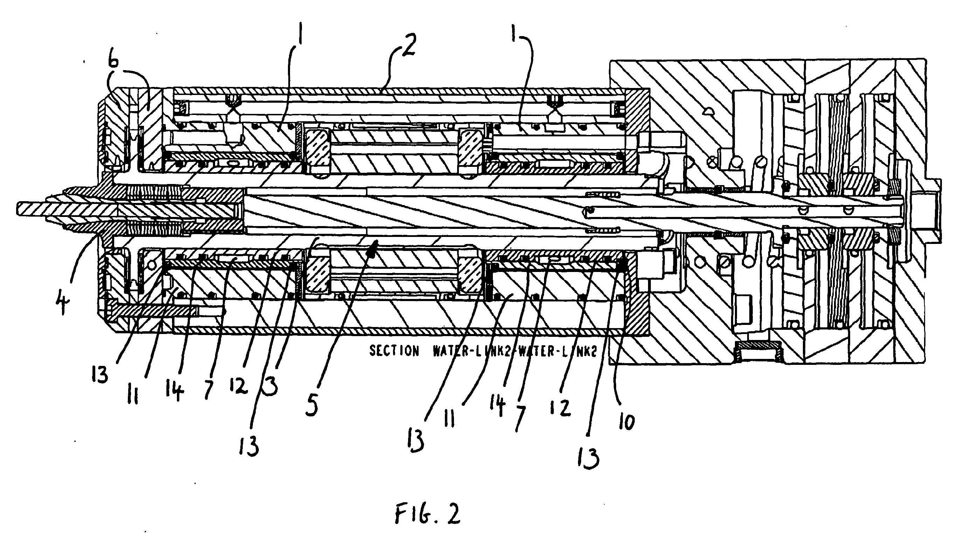

Figures 2 to 4 relate to an improved apparatus where cooling can be achieved without the significant detrimental effect on damping seen in the apparatus of Figure 1.

Figure 2 shows a PCB drilling spindle embodying the present invention. This PCB drilling spindle is intended to be usable for high speed drilling at for example speeds up to around 200,000 rpm or 300,000 rpm but also to be useable at relatively low speeds such as 15,000 to 20,000 rpm.

Much of the design and construction of the spindle shown in Figure 2 is conventional and is similar to that described above in relation to Figure 1.

Thus again, the spindle comprises a pair of radial air bearing assemblies 1 mounted within a spindle body 2. A shaft 3 carrying a tool holder 4 is journalled within the radial air bearings 1. Again a motor 5 is provided for rotatingly driving the shaft and hence the tool holder 4 and any carried tool relative to the main body 2 of the spindle. Again an axial bearing arrangement 6 is provided which acts on a thrust runner 31 which, in this instance, is provided at the same end of the shaft 3 as is the tool holder 4.

The radial air bearing assemblies 1 in the present spindle as shown in Figure 2 differ from those in the spindles shown in Figure 1. The front bearing assembly 1 disposed in the same region of the spindle as is the tool holder 4 is similar to, although not identical to, the rear bearing assembly 1 provided at the other end of the spindle.

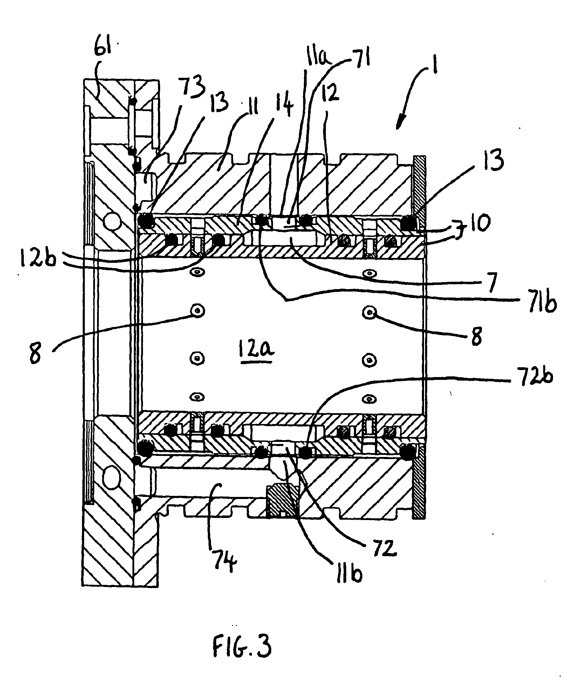

More detail of the front bearing assembly 1 is shown in Figure 3. The front bearing assembly 1 will be described in greater detail below with reference to Figures 2, 3 and 4.

In the front bearing assembly 1 of the spindle shown in Figure 2 there is again an outer bearing housing portion 11 within which is mounted an inner shell bearing portion 12. However in this instance an intermediate sleeve portion 14 is provided between the shell bearing portion 12 and the outer bearing housing portion 11. The inner shell bearing portion 12 and intermediate sleeve portion 14 can together be considered to make up an inner bearing portion 10.

Again, in this case the outer bearing housing portion 11 is generally annular and has a bore within which the inner bearing portion 10 is provided. Furthermore, the inner shell bearing portion 12 in the spindle of Figure 2 is generally annular and the intermediate sleeve portion 14 is again generally annular. The intermediate sleeve portion 14 in this embodiment is shrink fitted on to the inner shell bearing portion 12.

The inner bearing portion 10 is resiliently mounted within the outer bearing housing portion 11 in an analogous way to the way in which the inner shell bearing portion 12 is mounted within the outer bearing housing portion 11 in the spindle of Figure 1. Thus the inner bearing portion 10 is mounted in the outer bearing housing portion 11 via O rings 13 and there is a clearance between the outer curved wall of the inner bearing portion 10 and the inner curved wall of the bore in the outer bearing housing portion 11.

In this embodiment a coolant channel in the form of an annular groove 7 is provided in the inner bearing portion 10. Specifically this coolant channel 7 is provided between the inner shell bearing portion 12 and the intermediate sleeve portion 14. The coolant channel 7 is defined by surfaces of the inner shell bearing portion 12 on the one hand and the intermediate sleeve portion 14 on the other hand. Thus the coolant channel 7 is, to all intents and purposes, shielded from the outer bearing housing portion 11 by the intermediate sleeve 14 which resides between the coolant channel 7 and the outer bearing housing portion 11. This means that there is no direct, or one might say no mechanical, contact between the coolant provided within the coolant channel in use and the surface of the bore of the outer bearing housing portion 11.

Of course however, water must be fed into and out of the annular coolant channel 7 provided in the inner bearing portion 10. Thus an inlet 71 of the coolant channel 7 is in register with a supply port 11a provided in the outer bearing housing portion 11 and an outlet 72 of the coolant channel 7 is in register with an exhaust port 11 b in the outer bearing housing portion 11. Thus water may be fed into the coolant channel via the inlet port 11 a, flow around the channel 7 and then out of the channel 7 via the outlet 72 into the exhaust port 11b.

It should be noted that the coolant channel 7 extends all the way around the inner bearing portion 10. In the present embodiment the inlet 71 into the channel 7 is diametrically opposed to the outlet 72 and thus the coolant flows into the inlet 71 and then splits into two paths and flows around both sides of the bearing assembly before meeting again at the outlet 72 to exit the inner bearing portion 10.

A second coolant channel 73 is provided in the front radial bearing assembly 1 in the outer bearing housing portion 11. This second coolant channel 73 is provided for cooling the axial bearing arrangement 6. An axial bearing plate 61 of the axial bearing arrangement 6 abuts the outer bearing housing portion 11 of the front radial bearing assembly 1 and the second coolant channel 73 is formed as an annular groove in a surface of the outer bearing housing portion 11 which faces and abuts with the axial bearing plate 61.

The second coolant channel 73 is in fluid communication with the first coolant channel 7 via a supply channel 74 which runs in an axial direction within the outer bearing housing portion 11 to connect the exhaust port 11 b to the second coolant channel 73. Thus in use, water which flows first of all into and through the first coolant channel 7 provided in the inner bearing portion 10 then flows out of the inner bearing portion 10 and into the second coolant channel 73 via the supply channel 74.

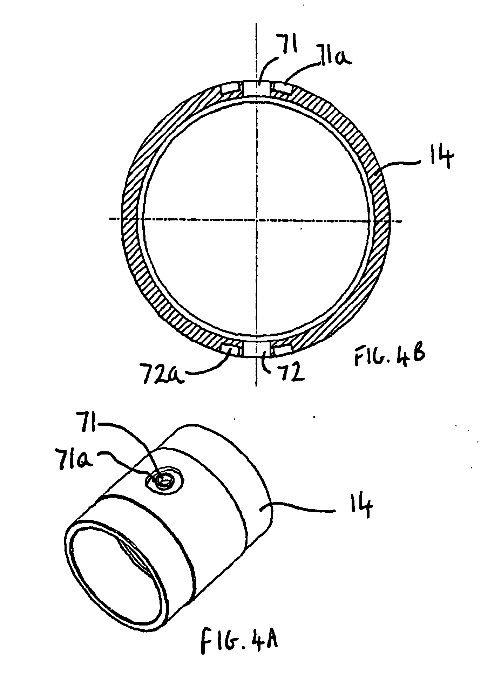

Figures 4A and 4B schematically show the intermediate sleeve 14 of the front radial bearing assembly 1. In particular they illustrate the inlet 71 and outlet 72 for the coolant channel 7. Surrounding the inlet 71 and outlet 72 are a respective O ring grooves 71a, 72a which each house a respective O ring 71b, 72b (see Figure 3). These O rings 71b, 72b act as a seal around the inlet and outlet respectively 71, 72 against the wall of the bore of the outer bearing housing portion 11 which they face as can be seen in Figure 3.

As mentioned above, the O rings 13 provided at each end of the inner bearing portion 10 provide resilient mounting of the inner bearing portion 10 relative to the outer bearing housing portion 11 to provide the required damping. The O rings 71b, 72b provided around the inlet and outlet 71, 72 need to provide a seal between the inlet port 11a and the inlet 71 and between the outlet 72 and the exhaust port 11b without destroying this resilient mounting. This can be achieved by ensuring that there is a suitable clearance between the surfaces of the intermediate sleeve 14 and the bore of the outer bearing housing portion 11 at that region and choosing suitable O rings 71b, 72b.

Here it is noted that whilst the intermediate sleeve 14 is annular and has a generally cylindrical outer surface, the thickness of the annulus is not constant along the axial length of the sleeve 14. In particular the sleeve 14 is larger in outside diameter in a central band in which the inlet 71 and outlet 72 are formed. Thus the outer curved surface of the sleeve 14 is stepped. As seen in Figure 3 this leads to a smaller clearance between the sleeve 14 and the bore of the outer bearing housing portion 11 in the central region of the bearing assembly 1, ie in the region of the inlet 71 and outlet 72.

It will be noted that whilst the O rings 71b, 72b around the inlet and outlet 71, 72 are arranged on the outer surface of the intermediate sleeve portion 14 with an orientation such that the axis of the O rings lies substantially along a radius of the bearing assembly, the main damping O rings 13 are provided so as to surround the inner bearing portion 10 and surround the intermediate sleeve portion 14 and are orientated so that their main axis is generally coincident with the axis of the bearing assembly 1.

Of course it will be remembered that the radial bearing assembly 1 is an air bearing assembly. Thus there needs to be sealing of air supply paths for supplying air into the air bearing as well as sealing of appropriate water channels through the bearing assembly for cooling.

In this respect it should be noted that the damping O rings 13 provided at either end of the bearing assembly 1 and the sealing O rings 71b, 72b provided around the inlet and outlet 71, 72 also provide a sealing function for providing suitable air supply channels to the air bearing.

As can be seen in Figure 3, the bearing assembly comprises two series of jets 8 which are provided in a bearing face 12a of the inner shell bearing portion 12. In operation, the jets 8 provide air into the air bearing to create the necessary gas film between the bearing face 12a and the shaft 3. It can be noted that the series of jets 8 are spaced axially from one another and the coolant channel 7 and the inlet and outlet 71, 72 of the coolant channel 7 are disposed axially between the two series of jets.

Further sealing O rings 12b are provided on either side of the series of jets between the inner shell bearing portion 12 and the intermediate sleeve portion 14. Each of these pairs of O rings 12b provide a seal for the air feed towards the jets 8. Again these sealing O rings 12b are orientated so as their axes are generally coincident with the main axis of the bearing assembly 1.

The above description has been in relation to the front radial bearing assembly 1 which is in the region of the spindle also occupied by the tool holder 4. However, in most respects the above description is equally applicable to the rear radial bearing assembly 1. In particular this again has a similar arrangement of an inner shell bearing portion 12 surrounded by an intermediate sleeve portion 14 which in turn is disposed within an outer bearing housing portion 11. Again a coolant channel 7 is provided between the intermediate sleeve portion 14 and the inner shell bearing portion 12. The main difference between the two radial bearing assemblies I in the present embodiment resides merely in the fact that the rear bearing assembly 1 does not include the second coolant channel 73 as it is not in proximity with the axial bearing arrangement 6.

Together the two radial bearing assemblies 1 allow water cooling of the bearings whilst still providing vibration damping in operation of the spindle.

Whilst the above description is mitten in terms of using the current ideas in PCB drilling applications, it should be noted that the ideas can be used in bearings for other machining applications. Such machining applications may or may not involve the use of high speeds of the type mentioned above and may or may not involve operation of the machine over a wide range of operational speeds as mentioned above.

In PCB drilling and other machining processes the machine is often provided with a tool touch down detection system for detecting the exact point at which the drill tip

(or other tool) first makes contact with the work piece, for example piece of PCB. In general these tool touch down systems make use of electrical detection and work on the basis that an electrical circuit is made when the tool makes contact with the work piece. In general, for such detection systems to work, there needs to be a conduction path through the machining spindle and in particular through the bearing assembly.

In most conventional bearing assemblies there is a ready made electrically conductive path through the spindle due to the construction of the spindle and bearing assembly.

However, in bearing assemblies of the type shown in Figure 3 and included in the spindle shown in Figure 2 this electrical conduction path is broken by the provision of the resilient O ring mountings 13 between the outer bearing housing portion 11 and inner bearing portion 10, or more specifically between the outer bearing housing portion 11 and the intermediate sleeve portion 14.

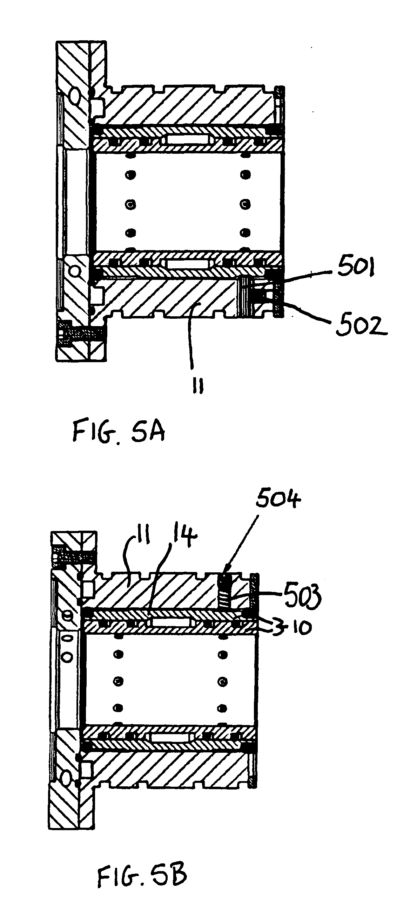

Figures 5A and 5B schematically show modified forms of the bearing assembly shown in Figure 3 which are designed with the aim of restoring this electrical conduction path through the bearing assembly and hence through the drilling spindle as a whole.

Figure 5A shows a first modified bearing assembly which is the same as the bearing assembly shown in Figure 3 in almost all respects. However it is shown along a different section than in Figure 3 and is modified by the provision of a carbon brush 501 which is mounted in the outer bearing housing portion 11 and is locked in position by an axial grub screw 502 which is sealed in position using an instant glue. The carbon brush 501 comprises a plurality of carbon brush filaments or fibres which are captured in a copper holder. The carbon filaments are flexible and thus do not interfere adversely with the resilient mounting between the outer bearing housing portion 11 and the inner bearing portion 10. Further, they provide good electrical contact.

However, it has been found that during use and/or maintenance there is a tendency for one or more filaments from the brush to become loose. Once such a filament is loose it may be trapped in one of the O ring seals in an assembly, particularly if the assembly is dissembled for maintenance or so on. Such a trapped filament will tend to cause water leakage as it interferes with the seal provided by the affected O ring.

Figure 5B shows a currently preferred modified version of the bearing assembly shown in Figure 3. Here again a resilient electrical contact element is provided to electrically connect the outer bearing housing portion 11 to the inner bearing portion 10. However in this case a helical compression spring 503 is provided in the outer bearing housing portion 11. The spring 503 is provided in a radial hole in the outer bearing housing portion 11 and is loaded against the inner bearing portion 10 and in particular against the intermediate sleeve portion 14 by a locking grub screw 504. This grub screw is then sealed in position with an instant glue. The helical compression spring 53 thus restores electrical connectivity through the bearing assembly and does not exhibit the problems associated with the carbon fibre brush included in the first modified version of the bearing assembly as shown in Figure 5A. In an alternative, the arrangement could be reversed, with the spring mounted on the inner bearing portion. Further if considered necessary more than one such contact element may be provided.

The following useful aspects of the present designs should be recognised.

Provided that the inner bearing portion 10 and outer bearing housing portion 11 are arranged so that the inner bearing portion 10 can rotate relative to the outer bearing housing portion under abnormal loads, the risk and/or extent of damage which occurs if the spindle fails, for example crashes or jams, can be reduced. The O rings in the assembly will resist relative rotation of the inner bearing portion 10 and outer bearing housing portion 11 in normal use. However under extreme load there can be some rotational give which can help reduce damage.

Due to the structure of the bearing assembly if damage occurs to the inner bearing portion 10 (the inner shell 12 and/or intermediate sleeve 14) these may be replaced if the remainder of the bearing is undamaged. This is obviously cheaper than replacing the whole bearing assembly.

## Claims

1. A gas bearing assembly (1) for a gas bearing spindle, the assembly comprising a housing portion (11) and an inner radial bearing portion (10) disposed within and resiliently mounted relative to the housing portion (11), the inner radial bearing portion comprising an inner shell bearing portion (12) having a bearing face, and an intermediate sleeve portion (14) which is disposed between the inner shell bearing portion (12) and the housing portion (11), **characterised in that** a liquid coolant channel (7) is provided between the inner bearing shell portion (12) and the intermediate sleeve portion (14).

2. A gas bearing assembly according to claim 1 in which at least one resilient damping member (13) is provided between the inner radial bearing portion (10) and the housing portion (11).

3. A gas bearing assembly according to claim 1 in which the at least one resilient damping member (13) is disposed on the intermediate sleeve portion (14).

4. A gas bearing assembly according to claim 2 or claim 3 in which there is a pair of resilient damping members (13) disposed between the housing portion and the inner radial bearing portion, and surrounding the inner radial bearing portion (10), the resilient damping members in the pair being axially spaced from one another.

5. A gas bearing assembly according to any preceding claim in which there is a pair of O rings (13) disposed between the housing portion (11) and the inner radial bearing portion (10), and surrounding the inner radial bearing portion, the O rings in the pair being axially spaced from one another and disposed on the intermediate sleeve portion.

6. A gas bearing assembly according to any preceding claim in which the inner shell bearing portion (12) fits closely inside the intermediate portion (14).

7. A gas bearing assembly according to any preceding claim in which the housing portion (11) has a bore in which the inner radial bearing portion (10) is disposed, with the inner radial bearing portion having an outer curved surface facing the wall of the bore and a clearance being provided between the outer curved surface of the inner radial bearing portion and the bore wherein, the liquid coolant channel (7) which is provided between the inner bearing shell portion and the intermediate sleeve portion has at least one of an outlet (72) and an inlet (71) which is at the outer curved surface of the inner radial bearing portion.

8. A gas bearing assembly according to claim 7 in which the gas bearing assembly comprises at least one auxiliary O ring (71b, 72b) which is disposed around the at least one of an outlet (72) and an inlet (71) of the liquid coolant channel.

9. A gas bearing assembly according to claim 8 wherein the auxiliary 0 ring (71b, 72b) is disposed on the intermediate sleeve portion (14).

10. A gas bearing assembly according to any preceding claim in which the bearing face (12a) comprises two series of gas outlets (8) for supplying gas to create a gas film between the bearing face and a shaft when journalled in the bearing assembly, which series are axially spaced from one another with the liquid coolant channel axially between the two series of gas outlets.

11. A gas bearing assembly according to any preceding claim which comprises a compression spring (503) arranged to act as a resilient electrical contact for electrically connecting the housing portion to the inner radial bearing portion.

12. A gas bearing assembly according to any preceding claim which comprises an axial bearing portion (6) and a second liquid coolant channel (73), which second liquid coolant channel (73) is provided in the region of the axial bearing portion (6) and which is in fluid communication with the liquid coolant channel (7) provided between the inner bearing shell portion (12) and the intermediate sleeve portion (14).

13. A gas bearing spindle comprising a gas bearing assembly (1) according to any preceding claim and a shaft (3) journalled within the bearing assembly.

## Patentansprüche

1. Eine Gaslageranordnung (1) für eine Gaslagerspindel, während die Anordnung einen Gehäusebereich (11) und einen inneren radialen Lagerbereich (10) umfasst, der angeordnet ist innerhalb und nachgiebig befestigt ist in Bezug auf den Gehäusebereich (11), wobei der innere radiale Lagerbereich einen inneren Mantellagerbereich (12) mit einer Lagerfläche und einen Zwischenhülsenbereich (14) aufweist, der zwischen dem inneren Mantellagerbereich (12) und dem Gehäusebereich (11) angeordnet ist, **dadurch gekennzeichnet, dass** ein Flüssig-Kühlmittel-Kanal (7) zwischen dem inneren Lagermantelbereich (12) und dem Zwischenhülsenbereich (14) bereitgestellt ist.

2. Eine Gaslageranordnung gemäß Patentanspruch 1, in der mindestens ein nachgiebiges Dämpfelement (13) zwischen dem inneren radialen Lagerbereich (10) und dem Gehäusebereich (11) bereitgestellt ist.

3. Eine Gaslageranordnung gemäß Patentanspruch 1, in der mindestens ein nachgiebiges Dämpfelement (13) auf dem Zwischenhülsenbereich (14) angeordnet ist.

4. Eine Gaslageranordnung gemäß Patentanspruch 2 oder Patentanspruch 3, in der ein Paar nachgiebige Dämpfelemente (13) zwischen dem Gehäusebereich und dem inneren radialen Lagerbereich angeordnet ist und das den inneren radialen Lagerbereich (10) umgibt, wobei die nachgiebigen Dämpfelemente in dem Paar axial voneinander beanstandet sind.

5. Eine Gaslageranordnung gemäß einem der vorhergehenden Patentansprüche, in der ein Paar O-Ringe (13) zwischen dem Gehäusebereich (11) und dem inneren radialen Lagerbereich (10) angeordnet ist und das den inneren radialen Lagerbereich umgibt, wobei die O-Ringe in dem Paar axial voneinander beanstandet sind und auf dem Zwischenhülsenbereich angeordnet sind.

6. Eine Gaslageranordnung gemäß einem der vorhergehenden Patentansprüche, in der der innere Mantellagerbereich (12) genau in den Zwischenbereich (14) passt.

7. Eine Gaslageranordnung gemäß einem der vorhergehenden Patentansprüche, in der der Gehäusebereich (11) eine Bohrung aufweist, in der der innere radiale Lagerbereich (10) angeordnet ist, während der innere radiale Lagerbereich eine äußere bogenförmige Oberfläche aufweist, die der Wand der Bohrung gegenüberliegt, und zwischen der äußeren bogenförmigen Oberfläche des inneren radialen Lagerbereich und der Bohrung ist ein Abstand bereitgestellt, wobei der Flüssig-Kühlmittel-Kanal (7), der zwischen dem inneren Lagermantelbereich und dem Zwischenhülsenbereich bereitgestellt ist, mindestens eins von einem Auslass (72) und einem Einlass (71) aufweist, der an der äußeren bogenförmigen Oberfläche des inneren radialen Lagerbereichs angeordnet ist.

8. Eine Gaslageranordnung gemäß Patentanspruch 7, in der die Gaslageranordnung mindestens einen zusätzlichen O-Ring (71 b, 72b) aufweist, der um den mindestens einen von einem Auslass (72) und einem Einlass (71) des Flüssig-Kühlmittel-Kanals angeordnet ist.

9. Eine Gaslageranordnung gemäß Patentanspruch 8, wobei der zusätzliche O-Ring (71 b, 72b) auf dem Zwischenhülsenbereich (14) angeordnet ist.

10. Eine Gaslageranordnung gemäß einem der vorhergehenden Patentansprüche, in der die Lagerfläche (12a) zwei Serien von Gasauslässen (8) zum Zuführen von Gas umfasst, um eine Gasschicht zwischen der Lagerfläche und einer Welle zu erzeugen, wenn sie in der Lageranordnung gedreht wird, wobei die Serien axial voneinander mit dem Flüssig-Kühlmittel-Kanal axial zwischen den zwei Serien von Gasauslässen beabstandet sind.

11. Eine Gaslageranordnung gemäß einem der vorhergehenden Patentansprüche, die eine Kompressionsfeder (503) aufweist, die angeordnet ist, um als ein nachgiebiger elektrischer Kontakt zum elektrischen Verbinden des Gehäusebereichs mit dem inneren radialen Lagerbereich zu agieren.

12. Eine Gaslageranordnung gemäß einem der vorhergehenden Patentansprüche, die einen axialen Lagerbereich (6) sowie einen zweiten Flüssig-Kühlmittel-Kanal (73) aufweist, wobei der zweite Flüssig-Kühlmittel-Kanal (73) in dem Bereich des axialen Lagerbereichs (6) bereitgestellt ist und der in Flüssigkeitsverbindung mit dem Flüssig-Kühlmittel-Kanal (7) steht, der zwischen dem inneren Lagermantelbereich (12) und dem Zwischenhülsenbereich (14) bereitgestellt ist.

13. Eine Gaslagerspindel, umfassend eine Gaslageranordnung (1) gemäß einem der vorhergehenden Patentansprüche sowie eine Welle (3), die innerhalb der Lageranordnung gedreht wird.

## Revendications

1. Un arrangement de palier à gaz (1) pour une broche à palier à gaz, l'arrangement comprenant un élément boîtier (11) et un élément palier intérieur radial (10) qui est arrangé dans l'élément boîtier (10) et qui est élastiquement fixé par rapport à celui-ci, l'élément palier intérieur radial (10) comprenant un élément coussinet de palier intérieur (12) ayant une face de palier et un élément douille intermédiaire (14) qui est arrangé entre l'élément coussinet de palier intérieur (12) et l'élément boîtier (11), **caractérisé en ce qu'**un canal à liquide de refroidissement (7) est prévu entre l'élément coussinet de palier intérieur (12) et l'élément douille intermédiaire (14).

2. L'arrangement de palier à gaz selon la revendication 1, dans lequel au moins un membre élastique d'amortissement (13) est prévu entre l'élément palier intérieur radial (10) et l'élément boîtier (11).

3. L'arrangement de palier à gaz selon la revendication 1, dans lequel au moins un membre élastique d'amortissement (13) est arrangé sur l'élément douille intermédiaire (14).

4. L'arrangement de palier à gaz selon la revendication 2 ou la revendication 3, dans lequel deux membres élastiques d'amortissement (13) sont arrangés entre l'élément boîtier et l'élément palier intérieur radial, et entourent l'élément palier intérieur radial (10), les deux membres élastiques d'amortissement étant espacés radialement entre eux.

5. L'arrangement de palier à gaz selon l'une quelconque des revendications précédentes, dans lequel deux joints toriques (13) sont arrangés entre l'élément boîtier (11) et l'élément palier intérieur radial (10), et entourent l'élément palier intérieur radial (10), les deux joints toriques étant espacés radialement entre eux et étant arrangés sur l'élément douille intermédiaire.

6. L'arrangement de palier à gaz selon l'une quelconque des revendications précédentes, dans lequel l'élément coussinet de palier intérieur (12) entre bien dans l'élément intermédiaire (14).

7. L'arrangement de palier à gaz selon l'une quelconque des revendications précédentes, dans lequel l'élément boîtier (11) comprend un alésage dans lequel est arrangé l'élément palier intérieur radial (10), avec l'élément intérieur palier intérieur radial ayant une surface extérieure courbée qui fait face au parois de l'alésage et un jeu étant prévu entre la surface extérieure courbée de l'élément palier intérieur radial (10) et l'alésage, où le canal à liquide de refroidissement (7) qui est arrangé entre l'élément coussinet de palier intérieur et l'élément douille intermédiaire a au moins une sortie (72) ou une entrée (71) qui se trouve sur la surface extérieure courbée de l'élément palier intérieur radial (10).

8. L'arrangement de palier à gaz selon la revendication 7, dans lequel l'arrangement de palier à gaz comprend au moins un joint torique auxiliaire (71 b, 72b) qui est arrangé autour d'au moins une sortie (72) ou entrée (71) du canal à liquide de refroidissement.

9. L'arrangement de palier à gaz selon la revendication 8, dans lequel le joint torique auxiliaire (71 b, 72b) est arrangé sur l'élément douille intermédiaire (14).

10. L'arrangement de palier à gaz selon l'une quelconque des revendications précédentes, dans lequel la face de palier (12a) comprend deux séries de sortie de gaz (8) pour l'approvisionnement du gaz afin de créer un film de gaz entre la face de palier et un arbre pendant qu'il est soutenu de manière glissante dans l'arrangement de palier, les séries étant espacées axialement l'une par rapport à l'autre avec le canal à liquide de refroidissement se trouvant axialement entre les deux séries de sorties de gaz.

11. L'arrangement de palier à gaz selon l'une quelconque des revendications précédentes qui comprend un ressort de compression (503) qui est arrangé pour agir comme un contact électrique élastique afin de connecter électriquement l'élément boîtier à l'élément palier intérieur radial.

12. L'arrangement de palier à gaz selon l'une quelconque des revendications précédentes qui comprend un élément palier axial (6) et un deuxième canal à liquide de refroidissement (73), le deuxième canal de refroidissement étant prévu dans la région de l'élément palier axial (6) et étant en communication de fluide avec le canal à liquide de refroidissement (7) qui est prévu entre l'élément coussinet de palier intérieur (12) et l'élément douille intermédiaire (14).

13. Une broche à palier à gaz comprenant un arrangement de palier à gaz (1) selon l'une quelconque des revendications précédentes et un arbre (3) qui comprend un arbre (3) qui est supporté de manière glissante dans l'arrangement de palier.
